# EUROPÄISCHE PATENTSCHRIFT

(11) **EP 2 406 088 B1**
(45) Veröffentlichungstag und Bekanntmachung des Hinweises auf die Patenterteilung: **26.12.2012**
(21) Anmeldenummer: 09764769.7
(22) Anmeldetag: 24.11.2009
(51) Int. Cl.: B60C 11/04, B60C 11/24

(54) **FAHRZEUGLUFTREIFEN**
PNEUMATIC TIRE FOR VEHICLES
BANDAGE PNEUMATIQUE POUR ROUE DE VÉHICULE

(30) Priorität: 10.03.2009 DE 102009003592
(43) Veröffentlichungstag der Anmeldung: 18.01.2012
(73) Patentinhaber: Continental Reifen Deutschland GmbH, 30165 Hannover (DE)
(72) Erfinder: FISCHER, Markus, 30823 Garbsen (DE); RITTWEGER, Stefan, 30163 Hannover (DE); DE KINKELIN, Gary, 30175 Hannover (DE); LIN, Cheng-Kuo, 30163 Hannover (DE); MAGGIORA, Alberto, 60322 Frankfurt/Main (DE)
(74) Vertreter: Finger, Karsten
(86) Internationale Anmeldenummer: PCT/EP2009/065684
(87) Internationale Veröffentlichungsnummer: WO 2010/102683

(56) Entgegenhaltungen:
- EP-A1- 0 908 330
- EP-A2- 1 216 853
- DE-A1- 4 220 677
- JP-U- 4 052 911

## Beschreibung

Die Erfindung betrifft ein Laufstreifenprofil eines Fahrzeugluftreifens mit radial erhabenen Profilelementen - insbesondere Profilblockelementen und/oder Profilrippen - die durch Profilrillen voneinander getrennt sind, wobei wenigstens eine Profilrille mit einer Richtungskomponente ihrer Haupterstreckung in Umfangsrichtung U des Fahrzeugluftreifens ausgebildet ist, wobei die Profilrille mit einem längs ihrer Erstreckung ausgerichteten Rillengrund und beiderseits des Rillengrundes jeweils mit einer Rillenwand ausgebildet ist, die sich in ihrer radialen Richtung aus dem Rillengrund bis zu der die benachbarten Profilelemente nach radial außen begrenzenden Mantelfläche erstreckt.

Dokument DE 4220677 A1 offenbart ein solches laufstreifenprofil.

Das menschliche Ohr reagiert im Bereich von 1000 Hertz sehr sensibel auf Geräusch. Bei Fahrzeugreifen entstehen gerade in diesem Bereich beim Betrieb störende Resonanzen.

Derartige Laufstreifenprofile sind bekannt. Die Umfangsrillen derartiger Profile sollen Wasser aus dem Profil aufnehmen und ableiten, wodurch die Aquaplaninggefahr reduziert wird. Die Umfangsrillen bilden beim Durchlaufen des Reifenlatsches eine Art Rohr mit offenem Ein- und Auslauf. Durch die Rotation des Fahrzeugluftreifens kann in dem Rohr eine stehende Druckwelle entstehen, die durch den "Horn-Effekt" verstärkt wird und sich in der Luft ausbreitet. Dies bedingt für das menschliche Ohr unangenehme Geräusche in dem besonders sensiblen 1000 Hertz -Bereich.

Der Erfindung liegt die Aufgabe zugrunde mit einfachen Mitteln ein Laufstreifenprofil eines Fahrzeugluftreifens mit radial erhabenen Profilelementen - insbesondere Profilblockelementen und/oder Profilrippen - die durch Profilrillen voneinander getrennt sind, wobei wenigstens eine Profilrille mit einer Richtungskomponente ihrer Haupterstreckung in Umfangsrichtung U des Fahrzeugluftreifens ausgebildet ist, wobei die Profilrille mit einem längs ihrer Erstreckung ausgerichteten Rillengrund und beiderseits des Rillengrundes jeweils mit einer Rillenwand ausgebildet ist, die sich in ihrer radialen Richtung aus dem Rillengrund bis zu der die benachbarten Profilelemente nach radial außen begrenzenden Mantelfläche erstreckt, zu schaffen, der trotz guter Wasseraufnahme und sicherer Wasserableitung eine starke Reduktion der Geräuschbildung ermöglicht.

Erfindungsgemäß gelöst wird die Aufgabe durch Ausbildung eines Laufstreifenprofils eines Fahrzeugluftreifens mit radial erhabenen Profilelementen - insbesondere Profilblockelementen und/oder Profilrippen - die durch Profilrillen voneinander getrennt sind, wobei wenigstens eine Profilrille mit einer Richtungskomponente ihrer Haupterstreckung in Umfangsrichtung U des Fahrzeugluftreifens ausgebildet ist, wobei die Profilrille mit einem längs ihrer Erstreckung ausgerichteten Rillengrund und beiderseits des Rillengrundes jeweils mit einer Rillenwand ausgebildet ist, die sich in ihrer radialen Richtung aus dem Rillengrund bis zu der die benachbarten Profilelemente nach radial außen begrenzenden Mantelfläche erstreckt, gemäß den Merkmalen von Anspruch 1, bei dem im Rillengrund längs der Haupterstreckung der Rille verteilt mehrere Erhebungen ausgebildet sind, wobei diese Erhebungen jeweils aus wenigstens zwei in Richtung quer zur Haupterstreckung der Rille nebeneinander angeordneten Erhebungsabschnitten, wobei die Erhebung in einer der beiden nebeneinander angeordneten Erhebungsabschnitten die Mantelfläche eines Zylindersegmentabschnitts oder eines Kegelstumpfabschnittes und in der anderen die Mantelfläche eines Zylindersegmentabschnittes oder eines Kegelstumpfabschnittes bildet, wobei die Achsen der Zylindersegment- bzw. Kegelstumpfabschnitte unterhalb der Rille mit Hauptrichtungskomponente quer zur Haupterstreckungsrichtung der Rille ausgebildet sind, wobei die beiden nebeneinander angeordneten Erhebungsabschnitte über ihre jeweilige Erstreckung im Erhebungsabschnitt mit voneinander unterschiedlichen Krümmungsradien (Rₐ,Rᵢ) ausgebildet sind

Die Erhebungen brechen die Luftströmung und ermöglichen eine chaotische Wellenausbreitung. Die nebeneinander angeordneten Erhebungsabschnitten, wobei die Erhebung in den beiden nebeneinander angeordneten Erhebungsabschnitten jeweils die Mantelfläche eines Zylindersegmentabschnitts bzw. Kegelstumpfabschnitt bildet, dessen Achse unterhalb der Rille in Richtung quer zur Haupterstreckungsrichtung der Rille ausgebildet ist, wobei die beiden Zylindersegment- bzw. Kegelstumpfabschnitte der nebeneinander angeordneten Erhebungsabschnitte mit unterschiedlichem Krümmungsradius sind, verstärken die chaotische Wellenausbreitung. Die unterschiedlichen Abschnitte ermöglichen die Beibehaltung eines großen Rillenvolumens zur Aufnahme und Weiterleitung von Wasser, wobei die gekrümmte Oberfläche eine Beschleunigung des Wassers durch den Abschnitt der Erhebung begünstigt und somit das Aquaplaningverhalten des Reifens begünstigt. Die unterschiedlich ausgebildeten Abschnitte bilden darüber hinaus ein System von nebeneinanderliegenden und sich strömungstechnisch beeinflussendes Luftströmungsbereichen mit unterschiedlichen Rohrquerschnitten und Krümmungen und somit von unterschiedlichen Beschleunigungen und Verwirbelungen und ein chaotisches Ausbreiten von Druckwellen. So bewirkt die Krümmung der nebeneinander angeordneten Erhebungsabschnitte aufgrund der unterschiedlichen Krümmungsradien zusätzlich eine über die Rillenbreite unterschiedliche Beschleunigung und Verwirbelung der Luft und ein chaotisches Ausbreiten von Druckwellen. Die Entstehung von sich ausbreitenden stehenden Druckwellen kann hierdurch besonders einfach und zuverlässig verhindert werden bei Aufrechterhaltung guter Aquaplaningeigenschaften.

Bevorzugt ist die Ausbildung gemäß den Merkmalen von Anspruch 2, bei dem im Rillengrund längs der Haupterstreckung der Rille verteilt mehrere Erhebungen ausgebildet sind, wobei diese Erhebungen jeweils aus wenigstens zwei in Richtung quer zur Haupterstreckung der Rille nebeneinander angeordneten Erhebungsabschnitten, wobei die Erhebung in den beiden nebeneinander angeordneten Erhebungsabschnitten jeweils die Mantelfläche eines Zylindersegmentabschnitts bildet, dessen Zylinderachse unterhalb der Rille in Richtung quer zur Haupterstreckungsrichtung der Rille ausgebildet ist, wobei die beiden Zylindersegmentabschnitte der nebeneinander angeordneten Erhebungsabschnitte Zylindersegmentabschnitte von Zylindern mit unterschiedlichem Krümmungsradius sind.

Besonders vorteilhaft ist die Ausbildung gemäß den Merkmalen von Anspruch 3, wobei die Zylindersegmentabschnitte Zylindersegmentabschnitte von Kreiszylindern sind. Dies ermöglicht eine optimierte Wasserableitung. Darüber hinaus kann auch bei abgefahrenem Profil, wenn die Erhebungen in Berührkontakt zur Straßenoberfläche treten, aufgrund der durch diese Ausbildung reduzierten Reifenanregung in Längsrichtung eine minimierte Geräuschbildung ermöglicht werden.

Besonders vorteilhaft ist die Ausbildung gemäß den Merkmalen von Anspruch 4, bei dem die Achsen der Zylindersegment- bzw. Kegelstumpfabschnitte der beiden nebeneinander angeordneten Erhebungsabschnitte in einer gemeinsamen Ebene senkrecht zur Haupterstreckungsrichtung der Rille liegen. Hierdurch wird eine weiter verbesserte Kanalisierung des Wassers ermöglicht.

Besonders vorteilhaft ist die Ausbildung gemäß den Merkmalen von Anspruch 5, bei dem die Achsen der Zylindersegment- bzw. Kegelstumpfabschnitte der beiden nebeneinander angeordneten Erhebungsabschnitte identisch sind. Hierdurch wird eine weiter verbesserte Kanalisierung des Wassers ermöglicht.

Besonders vorteilhaft ist die Ausbildung gemäß den Merkmalen von Anspruch 6, bei dem die Erhebungen zumindest teilweise aus wenigstens drei in Richtung quer zur Haupterstreckung der Rille nebeneinander angeordneten Erhebungsabschnitten ausgebildet sind, wobei die Erhebung in den drei nebeneinander angeordneten Erhebungsabschnitten jeweils die Mantelfläche eines Zylindersegmentabschnitts bildet, dessen Zylinderachse unterhalb der Rille in Richtung quer zur Haupterstreckungsrichtung der Rille ausgebildet ist, wobei der mittlere der drei Zylindersegmentabschnitte einen kleineren Krümmungsradius aufweist als die beiden äußeren. Hierdurch wird auch bei abgefahrenem Profil, wenn die Erhebungen in Berührkontakt zur Straßenoberfläche treten, aufgrund der durch diese steife Ausbildung reduzierten Reifenanregung in Querrichtung eine minimierte Geräuschbildung ermöglicht. Darüber hinaus ermöglicht die Ausbildung eine weiter verbesserte Kanalisierung der Wasser- und der Luftströmung.

Besonders vorteilhaft ist die Ausbildung gemäß den Merkmalen von Anspruch 7, wobei die beiden äußeren Zylindersegmentabschnitte einen gleich großen Radius (Rₐ) aufweisen.

Besonders vorteilhaft ist die Ausbildung gemäß den Merkmalen von Anspruch 8, wobei zumindest eine der beiden - insbesondere beide - in Richtung quer zur Haupterstreckung der Rille gesehenen äußeren Zylindersegment- bzw. Kegelstumpfabschnitte der Erhebungen jeweils an die nächstliegende Rillenwand der Rille angebunden sind. Hierdurch wird das Entstehen chaotischer Luftströmung begünstigt, was zur Geräuschreduktion weiter beiträgt. Darüber hinaus kann eine vollständige Entlüftung der zwischen Profil und Reifenform eingeschlossenen Luft beim Ausformen in der Vulkanisationsform erleichtert werden.

Besonders vorteilhaft ist die Ausbildung gemäß den Merkmalen von Anspruch 9, wobei zumindest eine der beiden - insbesondere beide - in Richtung quer zur Haupterstreckung der Rille gesehenen äußeren Zylindersegment- bzw. Kegelstumpfabschnitte der Erhebungen jeweils mit Abstand (d) zur nächstliegenden Rillenwand der Rille ausgebildet ist. Hierdurch kann die Wasserableitung begünstigt und durch geringe Steifigkeitsanbindung an die Rillenwände eine Reifenanregung und somit die Geräuschentstehung weiter vermindert werden.

Besonders vorteilhaft ist die Ausbildung gemäß den Merkmalen von Anspruch 10, wobei der Zylindersegmentabschnitt mit größerem Radius mit Radius einem Rₐ ausgebildet ist mit 4mm ≤ Rₐ ≤ 50mm - bevorzugt mit 15mm≤Rₐ≤20mm.

Besonders vorteilhaft ist die Ausbildung gemäß den Merkmalen von Anspruch 11, wobei der Zylindersegmentabschnitt mit kleinerem Radius mit Radius einem Rᵢ ausgebildet ist mit 3mm ≤ Rᵢ ≤ 40mm - bevorzugt mit 10mm≤Rᵢ≤15mm.

Besonders vorteilhaft ist die Ausbildung gemäß den Merkmalen von Anspruch 12, wobei die Erhebung im Zylindersegmentabschnitt mit größerem Radius in Haupterstreckungsrichtung der Rille mit einer Erstreckungslänge Lₐ ausgebildet ist, für die gilt: 5mm ≤ Lₐ ≤ 30mm.

Besonders vorteilhaft ist die Ausbildung gemäß den Merkmalen von Anspruch 13, wobei die Erhebung im Zylindersegmentabschnitt mit kleinerem Radius in Haupterstreckungsrichtung der Rille mit einer Erstreckungslänge Lᵢ ausgebildet ist, für die gilt: 3mm ≤ Lᵢ ≤ 25mm.

Besonders vorteilhaft ist die Ausbildung gemäß den Merkmalen von Anspruch 14, wobei die Erhebung im Zylindersegmentabschnitt mit größerem Radius mit einer maximalen Höhe Hₐ mit (0,2Pₜ)≤ Hₐ ≤ (0,5Pₜ) ausgebildet ist, wobei Hₐ die maximale Erstreckung in radialer Richtung R aus dem Profilgrund und Pₜ die maximale Profiltiefe in der Rille angibt.

Besonders vorteilhaft ist die Ausbildung gemäß den Merkmalen von Anspruch 15, wobei die Erhebung im Zylindersegmentabschnitt mit kleinerem Radius mit einer maximalen Höhe Hᵢ mit (0,2Pₜ)≤ Hᵢ ≤ (0,5Pₜ) ausgebildet ist, wobei Hᵢ die maximale Erstreckung in radialer Richtung R aus dem Profilgrund und Pₜ die maximale Profiltiefe in der Rille angibt.

Die Erfindung wird im Folgenden an Hand der in den Figuren 1 bis 13 dargestellten Ausführungsbeispiele näher erläutert. Dabei zeigen
- Fig. 1: Umfangsabschnitt des Profils eines Fahrzeugluftreifens in perspektivischer Darstellung,
- Fig. 2: vergrößerte Detailansicht des Details II-II von Fig. 1 zur Erläuterung der Ausbildung einer erfindungsgemäßen radialen Erhebung in einer Umfangsrille des Laufstreifenprofils von Fig. 1,
- Fig. 3: Umfangsrille mit erfindungsgemäßer radialer Erhebung in Schnittdarstellung gemäß Schnitt III-III von Fig. 2,
- Fig. 4: Umfangsrille mit erfindungsgemäßer radialer Erhebung in Schnittdarstellung gemäß Schnitt IV-IV von Fig. 2,
- Fig. 5: alternative Ausbildung einer Umfangsrille mit radialer Erhebung in einer Detaildarstellung analog zur Detaildarstellung von Fig. 2,
- Fig. 6: Querschnittsdarstellung der in Fig. 5 dargestellten Umfangsrille mit radialer Erhebung gemäß Schnitt VI-VI von Fig. 5,
- Fig. 7: Querschnittsdarstellung der in Fig. 5 dargestellten Umfangsrille mit radialer Erhebung gemäß Schnitt VII-VII von Fig. 5,
- Fig. 8: alternative Ausführung einer Umfangsrille mit radialer Erhebung in einer Detaildarstellung analog zur Detaildarstellung von Fig. 2,
- Fig. 9: Querschnittsdarstellung der in Fig. 8 dargestellten Umfangsrille mit radialer Erhebung gemäß Schnitt IX-IX von Fig. 8,
- Fig. 10: Querschnittdarstellung der in Fig. 8 dargestellten Umfangsrille mit radialer Erhebung gemäß Schnitt X-X von Fig. 8,
- Fig. 11: alternative Ausführung einer Umfangsrille mit radialer Erhebung in einer Detaildarstellung analog zur Detaildarstellung von Fig. 2,
- Fig. 12: Querschnittsdarstellung der in Fig. 11 dargestellten Umfangsrille mit radialer Erhebung gemäß Schnitt XII-XII von Fig. 11 und
- Fig. 13: perspektivische Darstellung der in Fig. 11 dargestellten Umfangsrille mit radialer Erhebung gemäß Schnitt XIII-XIII von Fig. 11.

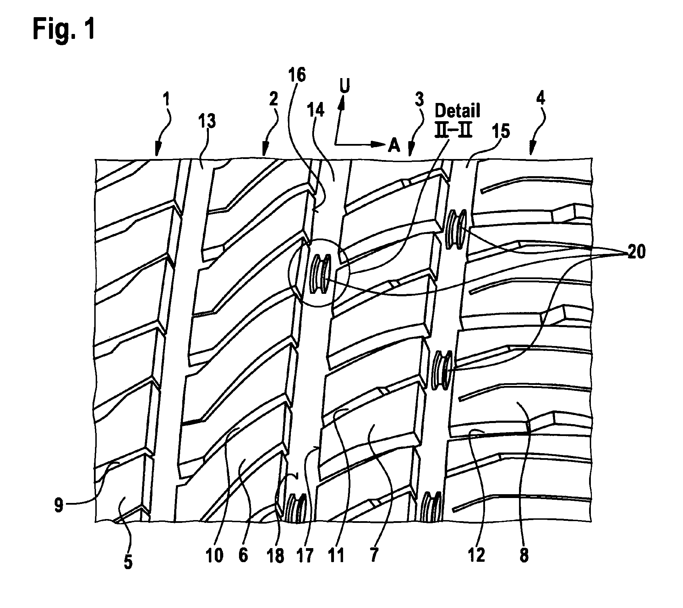

Die Figuren 1 bis 4 zeigen ein Laufstreifenprofil eines Fahrzeugluftreifens bekannter Art für Personenkraftwagen. Der Fahrzeugluftreifen ist in bekannter - nicht näher dargestellter Weise - mit zwei in Umfangsrichtung U über den Umfang des Fahrzeugluftreifens erstreckten Reifenwülsten, mit einer in Umfangsrichtung U über den Umfang des Fahrzeugluftreifens und in axialer Richtung A des Fahrzeugluftreifens von Reifenwulst zu Reifenwulst erstreckten Karkasse radialer Bauart mit einer oder zwei Lagen von in Kautschuk eingebetteten Festigkeitsträgern, mit einem in radialer Richtung R des Fahrzeugluftreifens außerhalb der Karkasse in Umfangsrichtung U über den Umfang des Fahrzeugluftreifens und in axialer Richtung A des Fahrzeugluftreifens von Reifenschulter zu Reifenschulter erstrecktem Gürtel aus einer oder zwei Lagen von in Kautschuk eingebetteten Festigkeitsträgern aus Stahl oder Aramid und gegebenenfalls einem radial außerhalb des Gürtels ausgebildeten Bandagestreifens mit in Umfangsrichtung ausgerichteten in Kautschuk eingebetteten Festigkeitsträgern zur Abdeckung der Gürtelkanten ausgebildet. Radial außerhalb des Gürtels und der gegebenenfalls darauf ausgebildeten Abdecklagen ist in bekannter Weise der profilierter Laufstreifen ausgebildet, der sich in axialer Richtung A des Fahrzeugluftreifens mindestens über die gesamte axiale Breite der Aufstandsfläche des Fahrzeugluftreifens und in Umfangsrichtung U über den gesamten Umfang des Fahrzeugluftreifens erstreckt.

Der profilierte Laufstreifen ist - wie in Fig. 1 dargestellt - in axialer Richtung A des Fahrzeugluftreifens mit mehreren Profilblockreihen 1, 2, 3 und 4 ausgebildet, die in axialer Richtung A nebeneinander angeordnet sind und sich in Umfangsrichtung U ausgerichtet jeweils über den gesamten Umfang des Fahrzeugluftreifens erstrecken. Die Profilblockreihe 1 ist in der Darstellung von Fig. 1 die linke Schulterprofilblockreihe, die Profilblockreihe 4 ist in der Darstellung von Fig. 1 die rechte Schulterprofilblockreihe des Laufstreifenprofils. Die Profilblockreihe 1 ist in bekannter Weise aus in Umfangsrichtung U des Fahrzeugluftreifens hintereinander angeordneten und jeweils durch eine Querrille 9 voneinander getrennt angeordneten Profilblockelementen 5 ausgebildet. Die Profilblockreihe 2 ist in bekannter Weise aus in Umfangsrichtung U des Fahrzeugluftreifens hintereinander angeordneten und jeweils durch eine Querrille 10 voneinander getrennt angeordneten Profilblockelementen 6 ausgebildet. Die Profilblockreihe 3 ist in bekannter Weise aus in Umfangsrichtung U des Fahrzeugluftreifens hintereinander angeordneten und jeweils durch eine Querrille 11 voneinander getrennt angeordneten Profilblockelementen 7 ausgebildet. Die Profilblockreihe 4 ist in bekannter Weise aus in Umfangsrichtung U des Fahrzeugluftreifens hintereinander angeordneten und jeweils durch eine Querrille 12 voneinander getrennt angeordneten Profilblockelementen 8 ausgebildet.

Die Profilblockreihe 1 und die Profilblockreihe 2 sind durch eine über den gesamten Umfang des Fahrzeugluftreifens erstreckte und in Umfangsrichtung U des Fahrzeugluftreifens ausgerichtete Umfangsrille 13 axial voneinander getrennt. Die Profilblockreihe 2 und die Profilblockreihe 3 sind durch eine in Umfangsrichtung U des Fahrzeugluftreifens ausgerichtete und über den gesamten Umfang des Fahrzeugluftreifens erstreckte Umfangsrille 14 axial voneinander getrennt. Die Profilblockreihe 3 und die Profilblockreihe 4 sind in axialer Richtung durch eine in Umfangsrichtung U des Fahrzeugluftreifens ausgerichtete und über den gesamten Umfang des Fahrzeugluftreifens erstreckte Umfangsrille 15 axial voneinander getrennt.

Die Querrillen 9 erstrecken sich in axialer Richtung A des Fahrzeugluftreifens von einer Position axial außerhalb der Bodenaufstandsfläche bis in die Umfangsrille 13. Die Querrillen 10 erstrecken sich in axialer Richtung A des Fahrzeugluftreifens von der Umfangsrille 13 bis in die Umfangsrille 14. Die Querrillen 11 erstrecken sich in axialer Richtung A des Fahrzeugluftreifens von der Umfangsrille 14 bis in die Umfangsrille 15. Die Querrillen 12 erstrecken sich in axialer Richtung A des Fahrzeugluftreifens von der Umfangsrille 15 bis in eine Position axial außerhalb der Bodenaufstandsfläche.

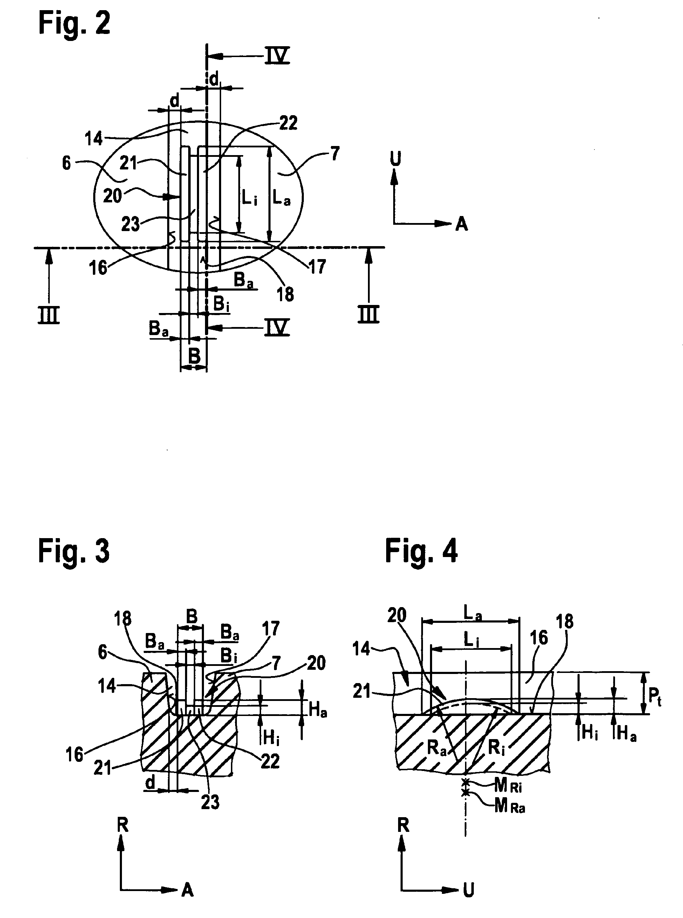

Die Umfangsrillen 13, 14 und 15 sind - wie in Fig. 1 und am Beispiel der Umfangsrille 14 in den Figuren 2 bis 4 dargestellt - jeweils durch einen in Umfangsrichtung U des Fahrzeugluftreifens ausgerichteten, über den gesamten Umfang des Fahrzeugluftreifens erstreckten und die Umfangsrille 14 nach radial innen begrenzenden im wesentlichen eben ausgebildeten Rillengrund 18 und axial beiderseits des Rillengrundes 18 mit jeweils einer die Umfangsrille 14 in axialer Richtung A nach außen begrenzenden Rillenwand 16 bzw. 17 ausgebildet. Die Rillenwand 16 begrenzt die jeweilige Umfangsrille 13, 14 bzw.15 dabei zu der einen - in Fig.1 jeweils linken - die Umfangsrille 13, 14 bzw.15 begrenzenden Profilblockreihe 1,2 bzw. 3 und die Rillenwand 17 begrenzt die jeweilige Umfangsrille13, 14 bzw.15 zu der anderen- in Fig.1 jeweils rechten - die Umfangsrille 13, 14 bzw.15 begrenzenden Profilblockreihe 2,3 bzw.4. Am Beispiel der Umfangsrille 14 begrenzt die Rillenwand 16, wie in den Figuren 2 bis 4 dargestellt ist, die Umfangsrille 14 axial zu der Profilblockreihe 2 und die Rillenwand 17 die Umfangsrille 14 axial zu der Profilblockreihe 3. Die Rillenwand 16 erstreckt sich dabei in radialer Richtung R des Fahrzeugluftreifens ausgehend vom Rillengrund 18 nach außen bis zu der die Profilblockreihe 2 nach radial außen begrenzenden Mantelfläche, die die Straßenkontaktfläche der Profilblockreihe 2 darstellt. Die Rillenwand 17 erstreckt sich in radialer Richtung R des Fahrzeugluftreifens ausgehend vom Rillengrund 18, nach außen bis zu der die Profilblockreihe 3 nach radial außen begrenzenden, die Straßenkontaktfläche bildenden Mantelfläche.

In den Umfangsrillen 13, 14 und 15 sind in Umfangsrichtung U des Fahrzeugluftreifens verteilt angeordnet jeweils radiale Erhebungen 20 ausgebildet, die sich aus dem Rillengrund 18 der jeweiligen Umfangsrille 13, 14 und 15 erstrecken.

Die radialen Erhebungen 20 sind in den Umfangsrillen 13, 14 und 15 jeweils so angeordnet, dass der Abstand zwischen zwei in Umfangsrichtung U aufeinander folgenden derartigen radialen Erhebungen 20 in der Umfangsrille 13 jeweils größer gewählt ist als in der Umfangsrille 14 und der Abstand zwischen zwei in Umfangsrichtung U aufeinander folgenden radialen Erhebungen 20 in der Umfangsrille 14 jeweils größer gewählt ist als der Abstand zweier in Umfangsrichtung U aufeinander folgenden radialen Erhebungen 20 in der Umfangsrille 15, wobei über den Umfang des Fahrzeugluftreifens die Abstände der radialen Erhebungen 20 auch innerhalb einer Umfangsrille 13, 14 und 15 jeweils variieren. In dem in Fig. 1 dargestellten Umfangabschnitt sind die Abschnitte zweier in Umfangsrichtung U aufeinander folgenden radialen Erhebungen 20 in der Umfangsrille 13 so groß gewählt, dass sie außerhalb des dargestellten Umfangsabschnittes liegen.

Wie in den Fig. 1 bis 4 am Beispiel einer radialen Erhebung 20 der Umfangsrille 14 dargestellt ist, ist die radiale Erhebung 20 aus drei in axialer Richtung A und somit quer zur Haupterstreckungsrichtung der Umfangsrille 14 nebeneinander angeordneten Erhebungsabschnitten 21, 22 und 23 ausgebildet, wobei die beiden äußeren Erhebungsabschnitte 21 und 22 jeweils mit einer Breite Bₐ ausgebildet sind und der mittlere Erhebungsabschnitt 23 mit einer Breite Bᵢ ausgebildet ist. Alle drei Erhebungsabschnitte 21, 22 und 23 erheben sich - wie in Fig. 4 zu erkennen ist - jeweils mit der Kontur einer kreiszylindrischen Mantelfläche aus dem Rillengrund 18, wobei die beiden äußeren Erhebungsabschnitte 21 und 22 mit einer kreiszylindrischen Mantelfläche mit einem Zylinderradius Rₐ und der mittlere Erhebungsabschnitt 23 mit einer kreiszylindrischen Mantelfläche mit einem Zylinderradius Rᵢ ausgebildet ist mit Rₐ > Rᵢ.

Die Krümmungsmittelpunkte M_{Ra} zu den kreiszylindrischen Mantelflächen der beiden äußeren Erhebungsabschnitte 21 und 22 und die Krümmungsmittelpunkte M_{Ri} der kreiszylindrischen Mantelfläche des mittleren Erhebungsabschnitts 23 liegen in radialer Richtung R des Fahrzeugluftreifens in einer Position radial unterhalb des Rillengrundes 18.

In den Schnittebenen senkrecht zur Breitenerstreckungsrichtung der Umfangsrille 14 - d. h. im dargestellten Beispiel der in Umfangsrichtung ausgerichteten Umfangsrille 14 in den Schnittebenen senkrecht zur axialen Richtung A des Fahrzeugluftreifens - liegen die Krümmungsmittelpunkte M_{Ra} zu den kreiszylindrischen Mantelflächen der beiden äußeren Erhebungsabschnitte 21 und 22 auf einer Parallelen zur axialen Richtung A des Fahrzeugluftreifens. Ebenso liegen die Krümmungsmittelpunkte M_{Ri} der kreiszylindrischen Mantelfläche des mittleren Erhebungsabschnitts 23 auf einer Parallelen zur axialen Richtung A des Fahrzeugluftreifens. Die Krümmungsmittelpunkte M_{Ri} und M_{Ra} liegen in einer gemeinsamen Ebene.

In dem in den Fig. 2 bis 4 dargestellten Ausführungsbeispiel liegen die Krümmungsmittelpunkte M_{Ri} und M_{Ra} in einer gemeinsamen Ebene, die die Drehachse des Fahrzeugluftreifens beinhaltet.

Die Radien Rₐ der beiden äußeren Erhebungsabschnitte 21 und 22 und der Radius Rᵢ des inneren Erhebungsabschnittes 23 sind so gewählt, dass gilt: 4 mm ≤ Rₐ ≤ 50 mm und 3 mm ≤ Rᵢ ≤ 40 mm. In einer besonderen Ausführung sind die beiden Radien Rₐ und Rᵢ so gewählt, dass gilt: 15 mm ≤ Rₐ ≤ 20 mm und 10 mm ≤ Rᵢ ≤ 15 mm. Beispielsweise ist in der dargestellten Ausführung Rₐ mit 14 mm und Rᵢ mit 12 mm gewählt.

Die beiden äußeren Erhebungsabschnitte 21 und 22 erstrecken sich in radialer Richtung R soweit aus dem Rillengrund 18 nach radial außen, dass sie in ihrem Scheitel eine maximale Höhe Hₐ aufweisen. Der mittlere Erstreckungsabschnitt 23 erstreckt sich in radialer Richtung R soweit aus dem Rillengrund 18 nach radial außen, dass er mit seinem Scheitel eine maximale Höhe Hᵢ aufweist. Die maximalen Höhen Hₐ und Hᵢ stellen dabei das in radialer Richtung R gemessene Erstreckungsmaß vom tiefsten Punkt des Rillengrundes 18 bis zum jeweiligen Scheitelpunkt des Erstreckungsabschnittes 21, 22 bzw. 23 dar. Die beiden äußeren Erhebungsabschnitte 21 und 22 erstrecken sich in ihrer Schnittebene mit dem Rillengrund 18 in Erstreckungsrichtung der Umfangsrille 14 gesehen, d. h. bei der dargestellten Umfangsrille 14 in Erstreckungsrichtung in Umfangsrichtung U über eine Länge Lₐ, und der mittlere Erhebungsabschnitt 22 über eine Länge Lᵢ. Für die Maße Hₐ, Hᵢ, Lₐ und Lᵢ gilt: Hₐ > Hᵢ und Lₐ > Lᵢ.

Das Maß Hₐ ist kleiner als das Maß der Profiltiefe Pₜ, die die maximale Rillentiefe der Umfangsrille 14 angibt, wobei Hₐ beim Reifen im Neuzustand so gewählt ist, dass im Neuzustand Hₐ ≤ (Pₜ/2) ist.

Die Maße Lₐ und Lᵢ sind so gewählt, dass gilt: 5mm ≤ Lₐ ≤ 30mm und 3mm ≤ Lᵢ ≤ 25mm.

Die Maße Hₐ und Hᵢ sind so gewählt, dass im Neuzustand des Reifens gilt:
(0,2Pₜ)≤ Hₐ ≤ (0,5Pₜ) und (0,2Pₜ)≤ Hᵢ ≤ (0,5Pₜ).

Wie in den Fig. 1 bis 4 dargestellt ist die gesamte Breite der radialen Erhebung 20 gemessen in Richtung quer zur Haupterstreckung der Umfangsrille 14, d. h. im darstellten Ausführungsbeispiel die in axialer Richtung A des Fahrzeugluftreifens gemessene Breite B, wobei diese in der Schnittebene der radialen Erhebung 20 mit dem Rillengrund 18 gemessen wird und wobei für B im dargestellten Ausführungsbeispiel gilt: B = (2Bₐ) + Bᵢ. Die Breiten Bₐ der äußeren Erhebungsabschnitte 21 und 22 und die Breite Bᵢ des mittleren Erhebungsabschnitt 23 sind so gewählt, dass gilt: (0,5 Bₐ) ≤ Bᵢ ≤ (3Bₐ).

Im dargestellten Ausführungsbeispiel der Fig. 2 bis 4 ist Bₐ = Bᵢ gewählt. Das Maß B ist so gewählt, dass B ≥ 3 mm.

In dem in den Fig. 1 bis 4 dargestellten Ausführungsbeispiel ist in axialer Richtung A des Fahrzeugluftreifens, d. h. quer zur Haupterstreckungsrichtung der Umfangsrille 14 jeweils zwischen dem zur Rillenwand 16 der Umfangsrille 14 weisenden äußeren Erhebungsabschnitt 21 und der Rillenwand 16 einerseits und dem zur Rillenwand 17 der Umfangsrille 14 weisenden äußeren Erhebungsabschnitt 22 und der Rillenwand 17 andererseits jeweils ein Abstand d eingehalten, der sich über die gesamte Erstreckungslänge der radialen Erhebung 20 in Haupterstreckungsrichtung der Umfangsrille 14 erstreckt, wodurch jeweils ein freier Durchgangskanal zwischen radialer Erhebung 20 und den beiden angrenzenden Rillenwänden 16 und 17 gebildet ist. Der Abstand d ist dabei so gewählt, dass d ≤ (B/3).

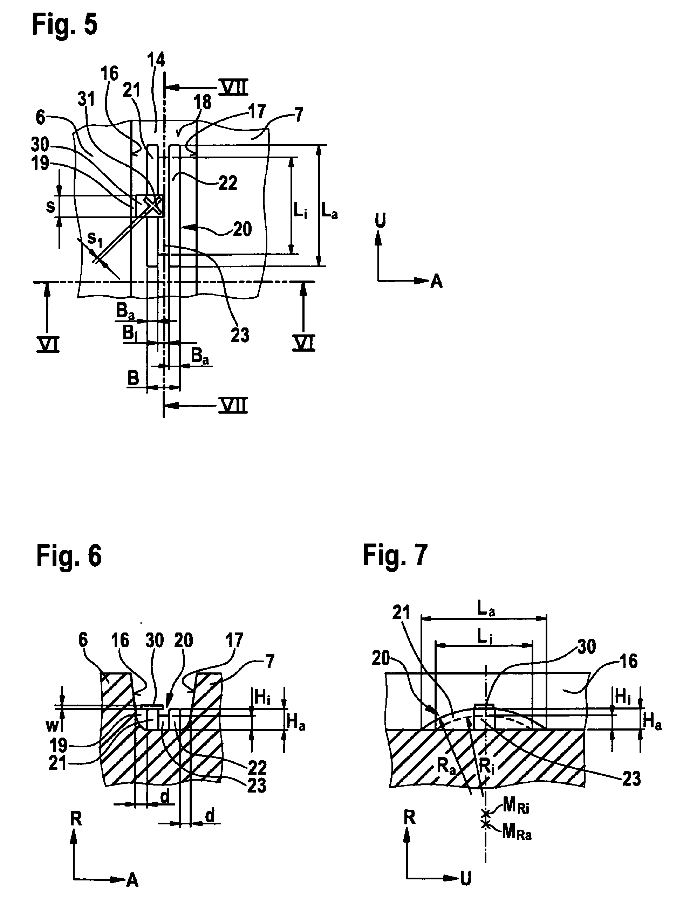

Die Fig. 5 bis 7 zeigen ein Ausführungsbeispiel wie die Fig.2 bis 4, bei dem jedoch der in den Figuren links dargestellte, der Rillenwand 16 zugewandte Erhebungsabschnitt 21 der radialen Erhebung 20 im Bereich seines Scheitelpunktes mit einer den Scheitelpunkt überdeckenden zusätzlichen dünnen Gummiplatte 30 bedeckt ist, in deren in radialer Richtung R nach außen weisender Oberfläche ein Einschnitt 31 ausgebildet ist. Die Gummiplatte 30 ist mit einer in radialer Richtung R gemessenen Dicke w ausgebildet, mit 0,5 mm ≤ w ≤ 1 mm. Die Gummiplatte 30 ist im dargestellten Ausführungsbeispiel quadratisch ausgebildet mit einer Kantenlänge s mit 2 mm ≤ s ≤ 5 mm. Im dargestellten Ausführungsbeispiel ist s = 3mm gewählt. Der Einschnitt 31 ist mit einer Schnittbreite s₁ ausgebildet mit 0,3mm ≤ s₁ ≤ 0,7 mm. Im dargestellten Ausführungsbeispiel ist s₁ = 0,5mm gewählt. Im dargestellten Ausführungsbeispiel ist der Einschnitt 31 als kreuzförmiger Einschnitt 31 ausgebildet. Die Gummiplatte 30 mit dem kreuzförmigen Einschnitt 31 ist ein Reifenverschleißanzeiger (Tread Wear Indikator). Das Abfahren des eingeschnittenen Kreuzes signalisiert dem Betrachter das Erreichen einer bestimmten vorgegebenen Profiltiefe.

In den Fig. 1 bis 4 ist jeweils dargestellt, dass längs der gesamten Längserstreckung der radialen Erhebung 20 keine seitliche Anbindung zu einer der beiden benachbarten Rillenwände 16 oder 17 ausgebildet ist, sodass ein vollständiger Durchgang der Breite b, der bis zum Rillengrund 18 reicht, verbleibt.

In den Fig. 5 bis 7 ist eine alternative Ausbildung dargestellt, bei der der zu der einen Rillenwand 16 weisende äußere Erhebungsabschnitt 21 im Bereich seines Scheitelpunkte durch einen kurzen Steg 19 an die Rillenwand 16 angebunden ist, wobei sich der Steg 19 in radialer Richtung R maximal bis zur zylindrischen Mantelfläche des radialen Erhebungsabschnitt 21 erstreckt.

In dem in den Fig. 5 bis 7 dargestellten Ausführungsbeispiel erstreckt sich die Gummiplatte 30 mit dem Einschnitt 31 in axialer Richtung A in Richtung Rillenwand 16 bis auf den Steg 19.

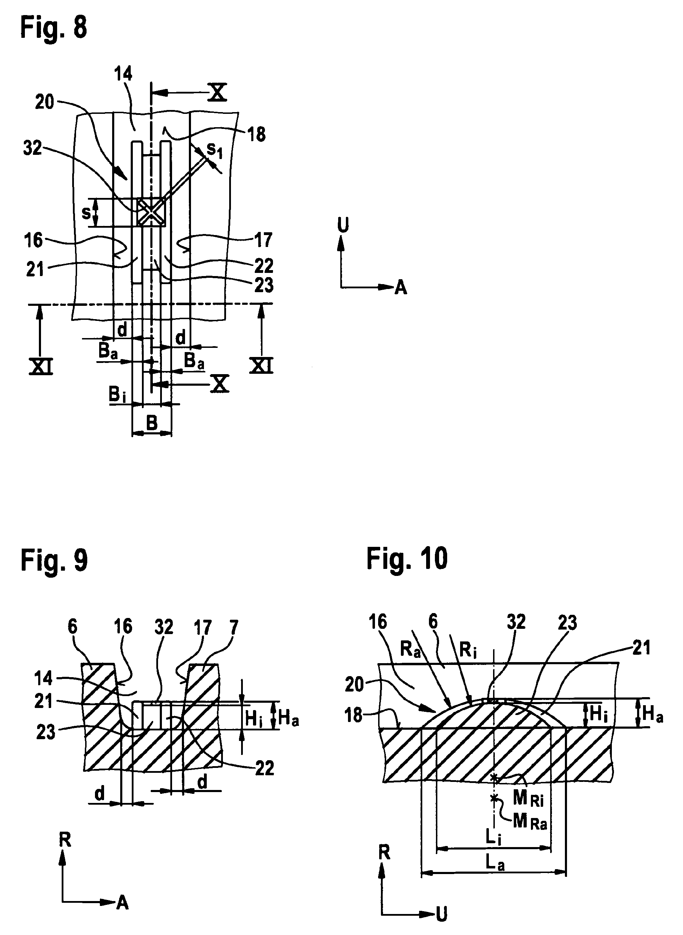

Die Fig. 8 bis 10 zeigen ein Ausführungsbeispiel ähnlich dem in den Fig. 2 bis 4 dargestellten Ausführungsbeispiel ohne seitlichen Steg. In den Fig. 8 bis 10 ist deutlich zu erkennen, dass bei diesem dargestellten Ausführungsbeispiel die Mittelpunkte M_{Ra} des mittleren Erhebungsabschnittes 23 in ihrer Position in radialer Richtung R des Fahrzeugluftreifens gesehen radial außerhalb der Mittelpunkte M_{Ra} der beiden äußeren Erhebungsabschnitte 21 und 22 angeordnet sind mit Rₐ > Rᵢ. In den Fig. 8 bis 10 ist deutlich zu erkennen, dass zwischen den beiden äußeren Erhebungsabschnitten 21 und 22 oberhalb des mittleren Erhebungsabschnittes 23 von den beiden äußeren Erhebungsabschnitten 21 und 22 und dem mittleren Erhebungsabschnitt 23 ein Kanal umschlossen wird, der in Richtung der Scheitelpunkte der Erhebungsabschnitte 21, 22 und 23 eine zunehmend kleinere Kanaltiefe aufweist. In diesem Bereich erfolgt beim Fahren eine Beschleunigung der Luftströmung.

Bei dem in den Fig. 8 bis 10 dargestellten Ausführungsbeispiel ist darüber hinaus eine Ausführung dargestellt, bei der die Scheitelpunkte der beiden äußeren Erhebungsabschnitte 21 und 22 und der Scheitelpunkt des mittleren Erhebungsabschnittes 23 sehr nah beieinander liegen.

In den Fig. 8 bis 10 ist darüber hinaus eine Ausführung dargestellt, bei der im Bereich der Scheitelpunkte über die Breite Bᵢ des mittleren Erhebungsabschnittes 23 hinweg erstreckt eine kreuzförmige rippenförmige Erhebung 32 ausgebildet ist, die sich nach radial außen bis zur Höhe des Scheitelpunktes Hₐ der beiden äußeren Erhebungsabschnitte 21 und 22 erstreckt. Die kreuzförmige rippenförmige Erhebung 32 ist dabei so ausgerichtet, dass die beiden sich kreuzenden Rippen jeweils schräg zur Haupterstreckungsrichtung der Umfangsrille14 und somit im Ausführungsbeispiel schräg zur Umfangsrichtung U ausgerichtet sind. Diese Ausrichtung der sich kreuzenden Rippen bewirkt eine weitere Strömungsverdichtung, Beschleunigung und Verwirbelung der Luftströmung. Die kreuzförmige rippenartige Erhebung 32 wird in einer Ausführung als Reifenverschleißanzeiger (Tread Wear Indikator) eingesetzt. Mit beginnendem Abrieb des Kreuzes ist eine hiermit bestimmte Profiltiefe verbunden und somit von einem Betrachter erkennbar. Bei vollständig erfolgtem Abrieb des Kreuzes ist eine weitere erreichte Profiltiefe erkennbar.

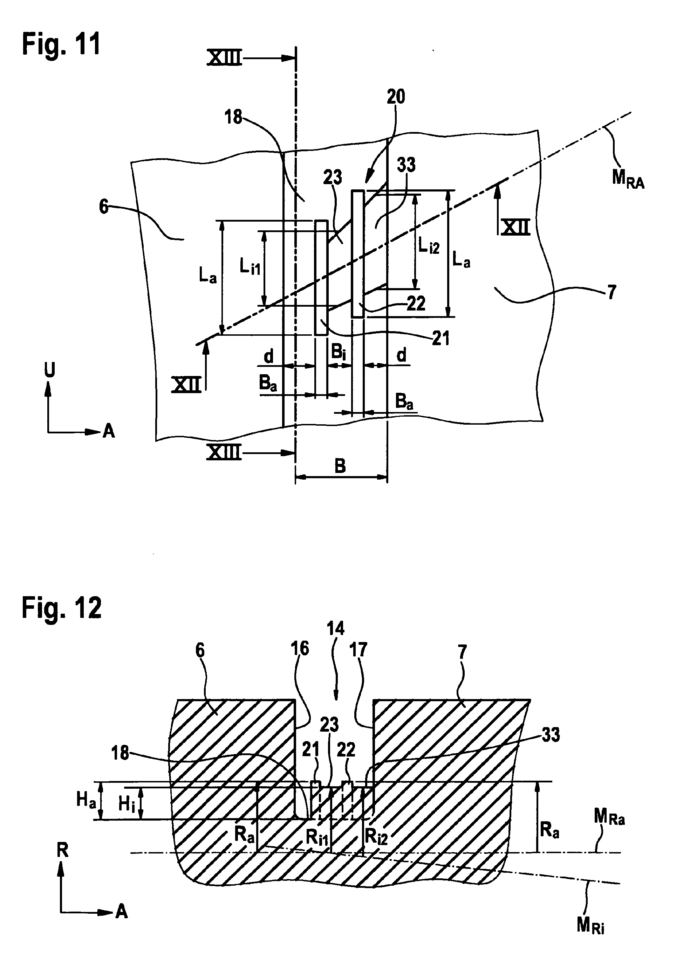

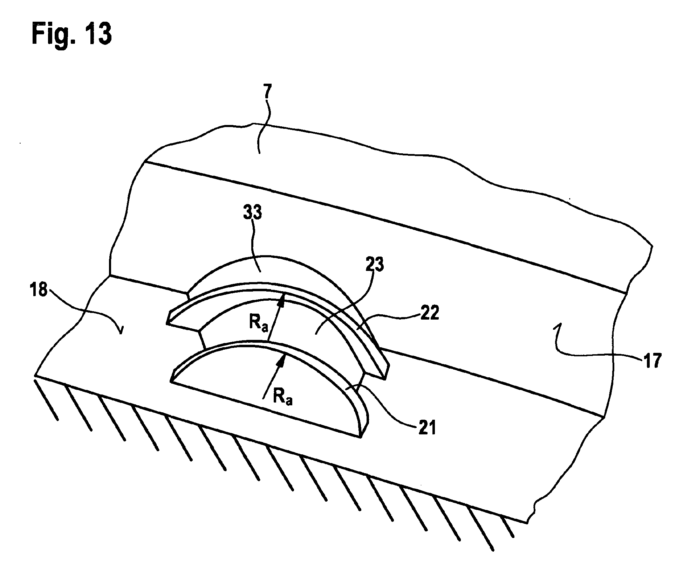

Figuren 11 bis 13 zeigen ein weiteres alternatives Ausführungsbeispiel ähnlich dem in den Figuren 5 bis 7 dargestellten Ausführungsbeispiel mit seitlichem Steg, jedoch ohne zusätzliche Gummiplatte. In diesem Ausführungsbeispiel ist der seitliche Steg selbst als zusätzlicher axialer Erhebungsabschnitt 33 ausgebildet. Die beiden Erhebungsabschnitte 21 und 22 sind auch mit kreiszylindrischen Mantelflächen mit Radius Rₐ ausgebildet. Der Erhebungsabschnitt 23 und der Erhebungsabschnitt 33 sind jeweils mit kegelstumpfsegmentartiger Mantelfläche ausgebildet, wobei beide Abschnitte zum gleichen Kegel gehören und die Achse des Kegels wie in Fig. 12 mit M_{Ri} bezeichnet eingetragen ist, läuft in der Darstellung von links nach rechts mit Neigungswinkel zur axialen Richtung A des Fahrzeugluftreifens geneigt, in der Weise, dass über die gesamte axiale Erstreckung der Abschnitte 23 und 33 die Abschnitte 23 und 33 eine maximale Höhe Hᵢ gegenüber dem Rillengrund 18 aufweisen, die über die gesamte axiale Erstreckung der Erhebungsabschnitte 23 und 33 gleichgroß bemessen ist. Diese Höhenlinie der maximalen Höhe Hᵢ ist eine Gerade. Die Radien R_{I1} des Kegelstumpfes des Erhebungsabschnitts 23 sind dabei ausgehend vom Erhebungsabschnitt 21 zum Erhebungsabschnitt 22 kontinuierlich wachsend ausgebildet. Die Radien R_{I2} des Kegelstumpfabschnittes 33 sind ausgehend vom Erhebungsabschnitt 22 bis zur Rillenwand 17 kontinuierlich wachsend ausgebildet, wobei die Radien R_{I1} und R_{I2} über den gesamten Erstreckungsabschnitt der Erhebungsabschnitte 23 und 33 kleiner ausgebildet sind als der Radius Rₐ der zylindersegmentförmig ausgebildeten Mantelfläche der Abschnitte 21 bzw. 22. Zwischen Erhebungsabschnitt 21 und Rillenwand 16 ist ein freier Durchlasskanal der Breite d ausgebildet.

### Bezugszeichenliste

### (Teil der Beschreibung)

- 1: Profilblockreihe
- 2: Profilblockreihe
- 3: Profilblockreihe
- 4: Profilblockreihe
- 5: Profilblockelement
- 6: Profilblockelement
- 7: Profilblockelement
- 8: Profilblockelement
- 9: Querrille
- 10: Querrille
- 11: Querrille
- 12: Querrille
- 13: Umfangsrille
- 14: Umfangsrille
- 15: Umfangsrille
- 16: Rillenwand
- 17: Rillenwand
- 18: Rillengrund
- 19: Steg
- 20: Erhebung
- 21: Erhebungsabschnitt
- 22: Erhebungsabschnitt
- 23: Erhebungsabschnitt
- 30: Plattenförmige Erhebung
- 31: Einschnitt
- 32: Rippenförmige Erhebung
- 33: Erhebungsabschnitt

## Patentansprüche

1. Laufstreifenprofil eines Fahrzeugluftreifens mit radial erhabenen Profilelementen (1,2,3,4) - insbesondere Profilblockelementen und/oder Profilrippen - die durch Profilrillen (13,14,15) voneinander getrennt sind, wobei wenigstens eine Profilrille (14) mit einer Richtungskomponente ihrer Haupterstreckung in Umfangsrichtung U des Fahrzeugluftreifens ausgebildet ist, wobei die Profilrille (14) mit einem längs ihrer Erstreckung ausgerichteten Rillengrund (18) und beiderseits des Rillengrundes (18) jeweils mit einer Rillenwand (16,17) ausgebildet ist, die sich in ihrer radialen Richtung R aus dem Rillengrund (18) bis zu der die benachbarten Profilelemente (2,3) nach radial außen begrenzenden Mantelfläche erstreckt,
**dadurch gekennzeichnet,**
**dass** im Rillengrund (18) längs der Haupterstreckung der Rille (14) verteilt mehrere Erhebungen (20) ausgebildet sind, wobei diese Erhebungen (20) jeweils aus wenigstens zwei in Richtung quer zur Haupterstreckung der Rille (14) nebeneinander angeordneten Erhebungsabschnitten (21,22), wobei die Erhebung (20) in einer der beiden nebeneinander angeordneten Erhebungsabschnitten (21,22) die Mantelfläche eines Zylindersegmentabschnitts oder eines Kegelstumpfabschnittes und in der anderen die Mantelfläche eines Zylindersegmentabschnittes oder eines Kegelstumpfabschnittes bildet, wobei die Achsen der Zylindersegment- bzw. Kegelstumpfabschnitte unterhalb der Rille (14) mit Hauptrichtungskomponente quer zur Haupterstreckungsrichtung der Rille (14) ausgebildet sind, wobei die beiden nebeneinander angeordneten Erhebungsabschnitte (21,22) über ihre jeweilige Erstreckung im Erhebungsabschnitt (21,22) mit voneinander unterschiedlichen Krümmungsradien (Rₐ,Rᵢ) ausgebildet sind.

2. Laufstreifenprofil eines Fahrzeugluftreifens gemäß den Merkmalen von Anspruch 1,
wobei die Erhebung (20) in den beiden nebeneinander angeordneten Erhebungsabschnitten (21,22) jeweils die Mantelfläche eines Zylindersegmentabschnitts bildet, dessen Zylinderachse unterhalb der Rille (14) in Richtung quer zur Haupterstreckungsrichtung der Rille (14) ausgebildet ist, wobei die beiden Zylindersegmentabschnitte der nebeneinander angeordneten Erhebungsabschnitte (21,22) Zylindersegmentabschnitte von Zylindern mit unterschiedlichem Krümmungsradius (Rₐ,Rᵢ) sind.

3. Laufstreifenprofil eines Fahrzeugluftreifens gemäß den Merkmalen von Anspruch 1 oder 2,
wobei die Zylindersegmentabschnitte Zylindersegmentabschnitte von Kreiszylindern sind.

4. Laufstreifenprofil eines Fahrzeugluftreifens gemäß den Merkmalen von Anspruch 1, 2 oder 3,
bei dem die Achsen der Zylindersegment- bzw. Kegelstumpfabschnitte der beiden nebeneinander angeordneten Erhebungsabschnitte (21,22) in einer gemeinsamen Ebene senkrecht zur Haupterstreckungsrichtung der Rille (14) liegen.

5. Laufstreifenprofil eines Fahrzeugluftreifens gemäß den Merkmalen von einem oder mehreren der vorangegangenen Ansprüche,
bei dem die Achsen der Zylindersegment- bzw. Kegelstumpfabschnitte der beiden nebeneinander angeordneten Erhebungsabschnitte (21,22) identisch sind.

6. Laufstreifenprofil eines Fahrzeugluftreifens gemäß den Merkmalen von einem oder mehreren der vorangegangenen Ansprüche,
bei dem die Erhebungen (20) zumindest teilweise aus wenigstens drei in Richtung quer zur Haupterstreckung der Rille (14) nebeneinander angeordneten Erhebungsabschnitten (21,22,23) ausgebildet sind, wobei die Erhebung (20) in den drei nebeneinander angeordneten Erhebungsabschnitten (21,22,23) jeweils die Mantelfläche eines Zylindersegmentabschnitts bildet, dessen Zylinderachse unterhalb der Rille (14) in Richtung quer zur Haupterstreckungsrichtung der Rille (14) ausgebildet ist, wobei der mittlere (23) der drei Zylindersegmentabschnitte (21,22,23) einen kleineren Krümmungsradius aufweist als die beiden äußeren (21,22).

7. Laufstreifenprofil eines Fahrzeugluftreifens gemäß den Merkmalen von Anspruch 6,
wobei die beiden äußeren Zylindersegmentabschnitte (21,22) einen gleich großen Radius (Rₐ) aufweisen.

8. Laufstreifenprofil eines Fahrzeugluftreifens gemäß den Merkmalen von einem oder mehreren der vorangegangenen Ansprüche,
wobei zumindest eine (21) der beiden - insbesondere beide - in Richtung quer zur Haupterstreckung der Rille (14) gesehenen äußeren Zylindersegment- bzw. Kegelstumpfabschnitte (21,22) der Erhebungen (20) jeweils an die nächstliegende Rillenwand (16) der Rille (14) angebunden sind.

9. Laufstreifenprofil eines Fahrzeugluftreifens gemäß den Merkmalen von einem oder mehreren der vorangegangenen Ansprüche 1 bis 7,
wobei zumindest eine (21) der beiden - insbesondere beide - in Richtung quer zur Haupterstreckung der Rille (14) gesehenen äußeren Zylindersegment- bzw. Kegelstumpfabschnitte (21,22) der Erhebungen (20) jeweils mit Abstand (d) zur nächstliegenden Rillenwand (16,17) der Rille (14) ausgebildet ist.

10. Laufstreifenprofil eines Fahrzeugluftreifens gemäß den Merkmalen von einem oder mehreren der vorangegangenen Ansprüche,
wobei der Zylindersegmentabschnitt (21,22) mit größerem Radius mit Radius einem Rₐ ausgebildet ist mit 4mm ≤ Rₐ ≤ 50mm - bevorzugt mit 15mm≤Rₐ≤20mm.

11. Laufstreifenprofil eines Fahrzeugluftreifens gemäß den Merkmalen von einem oder mehreren der vorangegangenen Ansprüche,
wobei der Zylindersegmentabschnitt (23) mit kleinerem Radius mit Radius einem Rᵢ ausgebildet ist mit 3mm ≤ Rᵢ ≤ 40mm - bevorzugt mit 10mm≤Rᵢ≤15mm.

12. Laufstreifenprofil eines Fahrzeugluftreifens gemäß den Merkmalen von einem oder mehreren der vorangegangenen Ansprüche,
wobei die Erhebung (20) im Zylindersegmentabschnitt (21,22) mit größerem Radius in Haupterstreckungsrichtung der Rille mit einer Erstreckungslänge Lₐ ausgebildet ist, für die gilt: 5mm ≤ Lₐ ≤ 30mm.

13. Laufstreifenprofil eines Fahrzeugluftreifens gemäß den Merkmalen von einem oder mehreren der vorangegangenen Ansprüche,
wobei die Erhebung (20) im Zylindersegmentabschnitt (23) mit kleinerem Radius in Haupterstreckungsrichtung der Rille (14) mit einer Erstreckungslänge Lᵢ ausgebildet ist, für die gilt: 3mm ≤ Lᵢ ≤ 25mm.

14. Laufstreifenprofil eines Fahrzeugluftreifens gemäß den Merkmalen von einem oder mehreren der vorangegangenen Ansprüche,
wobei die Erhebung (20) im Zylindersegmentabschnitt (21,22) mit größerem Radius mit einer maximalen Höhe Hₐ mit (0,2Pₜ)≤ Hₐ ≤ (0,5Pt) ausgebildet ist, wobei Hₐ die maximale Erstreckung in radialer Richtung R aus dem Profilgrund (18) und Pₜ die maximale Profiltiefe in der Rille (14) angibt.

15. Laufstreifenprofil eines Fahrzeugluftreifens gemäß den Merkmalen von einem oder mehreren der vorangegangenen Ansprüche,
wobei die Erhebung (20) im Zylindersegmentabschnitt (23) mit kleinerem Radius mit einer maximalen Höhe Hᵢ mit (0,2Pₜ)≤ Hᵢ ≤ (0,5Pt) ausgebildet ist, wobei Hᵢ die maximale Erstreckung in radialer Richtung R aus dem Profilgrund (18) und Pₜ die maximale Profiltiefe in der Rille (14) angibt.

## Claims

1. Tread profile of a pneumatic vehicle tyre having radially raised profile elements (1, 2, 3, 4) - in particular profile block elements and/or profile ribs - which are separated from one another by profile grooves (13, 14, 15), wherein at least one profile groove (14) is formed with a direction component of its main extension in the circumferential direction U of the pneumatic vehicle tyre, wherein the profile groove (14) is formed with a groove base (18) oriented along its extension and, on both sides of the groove base (18), with a respective groove wall (16, 17) which extends in its radial direction R from the groove base (18) as far as the lateral surface which radially outwardly delimits the adjacent profile elements (2, 3), **characterized in that** a plurality of elevations (20) are formed in the groove base (18) distributed along the main extension of the groove (14), wherein these elevations (20) each consist of at least two elevation portions (21, 22) arranged next to one another in a direction transversely with respect to the main extension of the groove (14), wherein the elevation (20) forms the lateral surface of a cylinder segment portion or of a truncated cone portion in one of the two elevation portions (21, 22) arranged next to one another and the lateral surface of a cylinder segment portion or of a truncated cone portion in the other, wherein the axes of the cylinder segment or truncated cone portions are formed below the groove (14) with a main direction component transversely with respect to the main extension direction of the groove (14), wherein the two elevation portions (21, 22) arranged next to one another are formed with different radii of curvature (Rₐ, Rᵢ) over their respective extension in the elevation portion (21, 22).

2. Tread profile of a pneumatic vehicle tyre according to the features of Claim 1, wherein the elevation (20) in the two elevation portions (21, 22) arranged next to one another in each case forms the lateral surface of a cylinder segment portion whose cylinder axis is formed below the groove (14) in a direction transversely with respect to the main extension direction of the groove (14), wherein the two cylinder segment portions of the elevation portions (21, 22) arranged next to one another are cylinder segment portions of cylinders having a different radius of curvature (Rₐ, Rᵢ).

3. Tread profile of a pneumatic vehicle tyre according to the features of Claim 1 or 2, wherein the cylinder segment portions are cylinder segment portions of circular cylinders.

4. Tread profile of a pneumatic vehicle tyre according to the features of Claim 1, 2 or 3, in which the axes of the cylinder segment or truncated cone portions of the two elevation portions (21, 22) arranged next to one another lie in a common plane perpendicular to the main extension direction of the groove (14).

5. Tread profile of a pneumatic vehicle tyre according to the features of one or more of the preceding claims, in which the axes of the cylinder segment or truncated cone portions of the two elevation portions (21, 22) arranged next to one another are identical.

6. Tread profile of a pneumatic vehicle tyre according to the features of one or more of the preceding claims, in which the elevations (20) are formed at least partially from at least three elevation portions (21, 22, 23) arranged next to one another in a direction transversely with respect to the main extension of the groove (14), wherein the elevation (20) in the three elevation portions (21, 22, 23) arranged next to one another in each case forms the lateral surface of a cylinder segment portion whose cylinder axis is formed below the groove (14) in a direction transversely with respect to the main extension direction of the groove (14), wherein the middle one (23) of the three cylinder segment portions (21, 22, 23) has a smaller radius of curvature than the two outer ones (21, 22).

7. Tread profile of a pneumatic vehicle tyre according to the features of Claim 6, wherein the two outer cylinder segment portions (21, 22) have an equal radius (Rₐ).

8. Tread profile of a pneumatic vehicle tyre according to the features of one or more of the preceding claims, wherein at least one (21) of the two - in particular both - outer cylinder segment or truncated cone portions (21, 22) of the elevations (20) as viewed in a direction transversely with respect to the main extension of the groove (14) is or are respectively attached to the closest groove wall (16) of the groove (14).

9. Tread profile of a pneumatic vehicle tyre according to the features of one or more of the preceding Claims 1 to 7, wherein at least one (21) of the two - in particular both - outer cylinder segment or truncated cone portions (21, 22) of the elevations (20) as viewed in a direction transversely with respect to the main extension of the groove (14) is or are respectively formed at a distance (d) from the closest groove wall (16, 17) of the groove (14).

10. Tread profile of a pneumatic vehicle tyre according to the features of one or more of the preceding claims, wherein the cylinder segment portion (21, 22) of larger radius is formed with a radius Rₐ where 4 mm≤Rₐ≤50 mm - preferably where 15 mm≤Rₐ≤20 mm.

11. Tread profile of a pneumatic vehicle tyre according to the features of one or more of the preceding claims, wherein the cylinder segment portion (23) of smaller radius is formed with a radius Rᵢ where 3 mm≤Rᵢ≤40 mm - preferably where 10 mm≤Rᵢ≤15 mm.

12. Tread profile of a pneumatic vehicle tyre according to the features of one or more of the preceding claims, wherein the elevation (20) in the cylinder segment portion (21, 22) with a larger radius in the main extension direction of the groove is formed with an extension length Lₐ, for which the following holds: 5 mm≤Lₐ≤30 mm.

13. Tread profile of a pneumatic vehicle tyre according to the features of one or more of the preceding claims, wherein the elevation (20) in the cylinder segment portion (23) with a smaller radius in the main extension direction of the groove (14) is formed with an extension length Lᵢ, for which the following holds: 3 mm≤Lᵢ≤25 mm.

14. Tread profile of a pneumatic vehicle tyre according to the features of one or more of the preceding claims, wherein the elevation (20) in the cylinder segment portion (21, 22) with a larger radius is formed with a maximum height Hₐ where (0.2Pₜ)≤Hₐ≤(0.5Pₜ), wherein Hₐ indicates the maximum extension in the radial direction R from the profile base (18) and Pₜ indicates the maximum profile depth in the groove (14).

15. Tread profile of a pneumatic vehicle tyre according to the features of one or more of the preceding claims, wherein the elevation (20) in the cylinder segment portion (23) with a smaller radius is formed with a maximum height Hᵢ where (0.2Pₜ)≤Hᵢ≤(0.5Pₜ), wherein Hᵢ indicates the maximum extension in the radial direction R from the profile base (18) and Pₜ indicates the maximum profile depth in the groove (14).

## Revendications

1. Profil de bande de roulement pour bandage pneumatique de véhicule, le profil présentant
des éléments profilés (1, 2, 3, 4) en saillie radiale, notamment des éléments de bloc profilé et/ou des nervures profilées, séparés les uns des autres par des rainures profilées (13, 14, 15),
une composante d'orientation de l'extension principale d'au moins une rainure profilée (14) s'étendant dans la direction périphérique U du bandage pneumatique pour roue de véhicule,
la rainure profilée (14) présentant un fond de rainure (18) orienté dans son extension et des parois de rainure (16, 17) disposées le long du fond (18) de la rainure sur les deux côtés du fond (18) de la rainure,
ces parois de rainure s'étendant dans sa direction radiale R depuis le fond (18) de la rainure jusqu'à la surface d'enveloppe qui délimite radialement vers l'extérieur les éléments profilés voisins (2, 3), **caractérisé en ce que**
plusieurs saillies (20) sont réparties dans le fond (18) de la rainure le long de l'extension principale de la rainure (14), ces saillies (20) étant chacune formée d'au moins deux parties de saillie (21, 22) disposées l'une à côté de l'autre dans la direction transversale par rapport à l'extension principale de la rainure (14),
**en ce que** la saillie (20) forme dans une des deux parties de saillie (21, 22) disposées l'une à côté de l'autre la surface d'enveloppe d'un segment de cylindre ou d'un segment de cône tronqué et dans l'autre la surface d'enveloppe d'un segment de cylindre ou d'un segment de tronc de cône,
**en ce que** les axes des segments de cylindre ou des segments de tronc de cône sont formés en dessous de la rainure (14) avec une composante d'orientation principale transversale par rapport à la direction de l'extension principale de la rainure (14) et
**en ce que** les deux parties de saillie (21, 22) disposées l'une à côté de l'autre sont configurées avec des rayons de courbure (Rₐ, Rᵢ) différents l'un de l'autre sur leur extension dans la partie de saillie (21, 22).

2. Profil de bande de roulement de bandage pneumatique de roue de véhicule selon les caractéristiques de la revendication 1, dans lequel la saillie (20) forme dans les deux parties de saillie (21, 22) disposées l'une à côté de l'autre la surface d'enveloppe d'un segment de cylindre dont l'axe est configuré en dessous de la rainure (14) dans la direction transversale par rapport à la direction d'extension principale de la rainure (14), les deux segments de cylindre des parties de saillie (21, 22) disposées l'une à côté de l'autre étant des segments de cylindre qui présentent des rayons de courbure (Rₐ, Rᵢ) différents.

3. Profil de bande de roulement de bandage pneumatique de roue de véhicule selon les caractéristiques des revendications 1 ou 2, dans lequel les segments de cylindre sont des segments de cylindre circulaire.

4. Profil de bande de roulement de bandage pneumatique de roue de véhicule selon les caractéristiques des revendications 1, 2 ou 3, dans lequel les axes des segments de cylindre ou des segments de tronc de cône des deux parties de saillie (21, 22) disposées l'une à côté de l'autre sont situés dans un plan commun perpendiculaire à la direction d'extension principale de la rainure (14).

5. Profil de bande de roulement de bandage pneumatique de roue de véhicule selon les caractéristiques d'une ou plusieurs des revendications précédentes, dans lequel les axes des segments de cylindre ou de tronc de cône des deux parties de saillie (21, 22) disposées l'une à côté de l'autre sont identiques.

6. Profil de bande de roulement de bandage pneumatique de roue de véhicule selon les caractéristiques d'une ou plusieurs des revendications précédentes, dans lequel les saillies (20) sont formées au moins en partie d' au moins trois parties de saillie (21, 22, 23) disposées les unes à côté des autres dans la direction transversale à l'extension principale de la rainure (14), la saillie (20) formant dans les trois parties de saillie (21, 22, 23) disposées les unes à côté des autres la surface d'enveloppe d'un segment de cylindre dont l'axe du cylindre est formé en dessous de la rainure (14) dans la direction transversale par rapport à la direction d'extension principale de la rainure (14), le segment central (23) des trois segments de cylindre (21, 22, 23) présentant un rayon de courbure plus petit que les deux segments de cylindre (21, 22) extérieurs.

7. Profil de bande de roulement de bandage pneumatique de roue de véhicule selon les caractéristiques de la revendication 6, dans lequel les deux segments de cylindre extérieurs (21, 22) présentent un même rayon (Rₐ).

8. Profil de bande de roulement de bandage pneumatique de roue de véhicule selon les caractéristiques d'une ou plusieurs des revendications précédentes, dans lequel au moins un (21) et en particulier les deux segments de cylindre ou segments de tronc de cône (21, 22) des saillies (20) situés à l'extérieur dans la direction transversale à l'extension principale de la rainure (14) sont raccordés à la paroi (16) la plus proche de la rainure (14).

9. Profil de bande de roulement de bandage pneumatique de roue de véhicule selon les caractéristiques d'une ou plusieurs des revendications 1 à 7 qui précèdent, dans lequel au moins un (21) et en particulier les deux segments de cylindre ou segments de tronc de cône (21, 22) des saillies (20) situés à l'extérieur dans la direction transversale par rapport à l'extension principale de la rainure (14) présentent une distance (d) par rapport à la paroi (16, 17) la plus proche de la rainure (14).

10. Profil de bande de roulement de bandage pneumatique de roue de véhicule selon les caractéristiques d'une ou plusieurs des revendications précédentes, dans lequel le segment de cylindre (21, 22) de plus grand rayon présente un rayon Rₐ qui vérifie la relation 4 mm ≤ Rₐ ≤ 50 mm et de préférence la relation 15 m ≤ Rₐ ≤ 20 mm.

11. Profil de bande de roulement de bandage pneumatique de roue de véhicule selon les caractéristiques d'une ou plusieurs des revendications précédentes, dans lequel le segment de cylindre (23) de plus petit rayon présente un rayon Rᵢ qui vérifie la relation 3 mm ≤ Rᵢ ≤ 40 mm et de préférence la relation 10 mm ≤ Rᵢ ≤ 15 mm.

12. Profil de bande de roulement de bandage pneumatique de roue de véhicule selon les caractéristiques d'une ou plusieurs des revendications précédentes, dans lequel la saillie (20) du segment de cylindre (21, 22) qui présente le plus grand rayon présente dans la direction d'extension principale de la rainure une longueur Lₐ qui vérifie la relation 5 mm ≤ Lₐ ≤ 30 mm.

13. Profil de bande de roulement de bandage pneumatique de roue de véhicule selon les caractéristiques d'une ou plusieurs des revendications précédentes, dans lequel la saillie (20) située dans le segment du cylindre (23) de plus petit rayon présente dans la direction d'extension principale de la rainure (14) une longueur Lᵢ qui satisfait la relation 3 mm ≤ Lᵢ ≤ 25 mm.

14. Profil de bande de roulement de bandage pneumatique de roue de véhicule selon les caractéristiques d'une ou plusieurs des revendications précédentes, dans lequel la saillie (20) située dans le segment du cylindre (21, 22) de plus grand rayon présente une hauteur maximale Hₐ qui vérifie la relation (0,2 Pₜ) ≤ Hₐ ≤ (0,5 Pt), Hₐ représentant l'extension maximale dans la direction radiale R depuis le fond (18) du profil et Pₜ indiquant la profondeur maximale du profil dans la rainure (14).

15. Profil de bande de roulement de bandage pneumatique de roue de véhicule selon les caractéristiques d'une ou plusieurs des revendications précédentes, dans lequel la saillie (20) située dans le segment du cylindre (23) de plus petit rayon présente une hauteur maximale Hᵢ qui vérifie la relation (0,2 Pₜ) ≤ Hᵢ ≤ (0,5 Pt), Hᵢ représentant l'extension maximale dans la direction radiale R depuis le fond (18) du profil et Pₜ indiquant la profondeur maximale du profil dans la rainure (14).
